# EUROPEAN PATENT SPECIFICATION

(11) **EP 2 974 637 B1**
(45) Date of publication and mention of the grant of the patent: **14.08.2019**
(21) Application number: 14181483.0
(22) Date of filing: 19.08.2014
(51) Int. Cl.: A47K 3/40, B29C 59/04, B29C 51/00

(54) **Method of manufacturing articles having anti-slip surfaces**
Verfahren zur Herstellung von Gegenständen mit rutschhemmenden Oberflächen
Procédé de fabrication d'articles présentant des surfaces non glissantes

(30) Priority: 01.07.2014 GB 201411729
(43) Date of publication of application: 20.01.2016
(73) Proprietor: Kohler Mira Limited, Gloucestershire GL52 5EP (GB)
(72) Inventor: NURSE, Mark Christopher, Cheltenham, Gloucestershire GL52 5EP (GB); TUSTAIN, Julia, Cheltenham, Gloucestershire GL52 5EP (GB)
(74) Representative: Barker Brettell LLP

(56) References cited:
- EP-A1- 1 323 368
- EP-A2- 0 089 680
- WO-A1-2004/108371
- JP-A- 2013 022 748
- US-A- 4 336 293
- US-A1- 2008 210 366
- US-B1- 6 231 938

## Description

This invention relates to shower trays, baths and tubs having anti-slip surfaces.

It is known to provide articles of sanitary ware such as shower trays with an anti-slip surface by providing raised areas such as ribs in the surface of the shower tray. Such raised areas typically have a height of several millimetres and provide channels for water to flow to the drain hole, However, these raised areas have the same smooth surface finish as the surrounding areas of the shower tray and do not significantly reduce the risk of a person slipping, especially when the surface is contaminated with soap.

It is also known to provide articles of sanitary ware such as shower trays with an anti-slip surface by coating the surface of the shower tray with a material having embedded particles that provide a rough surface finish. A typical method involves spraying the material onto the surface of the shower tray. A disadvantage of this method is that it involves applying the material to the shower tray after it has been made. As a result, there is a risk of damage to the shower tray and/or of the coating being applied to areas of the shower tray where it is not required. Also, there are problems in applying the material evenly over the area to be covered by the anti-slip surface. As a result, the anti-slip performance of the surface may vary. There can also be problems due to separation of the coating from the shower tray where the bond between the material and the surface of the shower tray is poor.

An anti-slip mat for use on floors is known from US-A-4336293 having an undulating top surface with raised and depressed portions coated with an anti-slip layer of grit bonded to the raised portions with a polyurethane make adhesive resin and covered by a polyurethane adhesive size resin.

US 6 231 938 B1 discloses a method according to the preamble of claim 1.

It is an object of the invention to overcome or at least mitigate some of the aforementioned disadvantages.
The present invention provides a method of manufacturing an article having an upper surface of plastics material provided with an anti-slip feature in the upper surface as defined in claim 1. Optional features of the method are the subject of claims 2 to 11.
The invention provides an article having an upper surface of plastics material wherein the upper surface is provided with an anti-slip feature by embossing the plastics material of the upper surface to create a textured finish having a plurality of raised areas.
By this method, the anti-slip feature is formed as an integral part of the plastics material of the upper surface of the article as opposed to applying an anti-slip coating material to the upper surface of the article. Forming the textured finish in the plastics material of the upper surface avoids the need for a post forming step such as required to apply an anti-slip coating to the already formed article. As a result, the overall process time and costs of providing an anti-slip finish may be reduced compared processes where the anti-slip finish is applied, for example by spraying, to the formed article
The raised areas have a substantially uniform height. The raised areas have a height of 80 *µ*m*.*

The anti-slip feature is formed by embossing the upper surface with a roller having a pattern configured to create the textured finish in the upper surface. It may be that the roller and/or the plastic material is heated.

The anti-slip feature is formed by embossing the upper surface of a sheet of plastics material and subsequently forming the article from the sheet of plastics material having the anti-slip feature formed therein.

The article is a shower tray, bath or tub. It may be that the anti-slip feature is covers all the upper surface of the article. Alternatively, it may be that the anti-slip feature covers part of the upper surface. For example, the anti-slip feature may be confined to a recessed area in the upper surface of the article. Thus, where the article is a shower tray the anti-slip feature may be confined to a well area of the shower tray.

It may be that the upper surface comprises a plastics material that provides a hardwearing, scratch resistant surface, for example an acrylic plastics material. It may be that a softer plastics material is provided underneath the plastics material of the upper surface, for example an ABS plastics material. It may be that the anti-slip feature is confined to the harder plastics material of the upper surface.

It may be that the plastics material of the upper surface contains one or more additives providing desired characteristics. For example, the plastics material may contain an anti-microbial additive. It may be that the anti-slip feature is enhanced by the presence of the anti-microbial additive.

It may be that, when tested according to DIN 50197:1992, the slip angle of the textured finish is at least 12° (classification A), more preferably at least 18° (classification B), and most preferably at least 24° (classification C).

According to an embodiment of the invention, there is provided a method of manufacturing an article having an upper surface of plastics material provided with an anti-slip feature in the upper surface, the method including the steps of providing a roller with a surface pattern configured to create a desired anti-slip feature, providing a sheet of plastics material having an upper surface and a lower surface, embossing the upper surface of the sheet of plastics material with the roller, and using the sheet of plastics material to form the article wherein the article comprises a shower tray, bath or tub, wherein the upper surface is provided with the anti-slip feature by embossing the plastics material of the upper surface to create a textured finish having a plurality of raised areas having a substantially uniform height of 80 *µ*m, and wherein the upper surface of the sheet having the textured finish forms an upper surface of the article.

In this embodiment, the anti-slip feature is formed as an integral part of the plastics material of the upper surface of the article as opposed to applying an anti-slip coating material to the upper surface of the article. Forming the textured finish in the plastics material of the upper surface avoids the need for a post forming step such as required to apply an anti-slip coating to the already formed article. As a result, the overall process time and costs of providing an anti-slip finish may be reduced compared processes where the anti-slip finish is applied, for example by spraying, to the formed article

The raised areas have a substantially uniform height of 80 *µ*m*.*

The anti-slip feature is formed by embossing the upper surface with a roller having a pattern configured to create the textured finish in the upper surface. It may be that the roller and/or the plastic material is heated.

The anti-slip feature is formed by embossing the upper surface of a sheet of plastics material and subsequently forming the article from the sheet of plastics material having the anti-slip feature formed therein.

The article is a shower tray, bath or tub. It may be that the anti-slip feature is covers all the upper surface of the article. Alternatively, it may be that the anti-slip feature covers part of the upper surface. For example, the anti-slip feature may be confined to a recessed area in the upper surface of the article. Thus, where the article is a shower tray the anti-slip feature may be confined to a well area of the shower tray.

It may be that the upper surface comprises a layer of plastics material that provides a hardwearing, scratch resistant surface, for example an acrylic plastics material. It may be that a layer of softer plastics material is provided underneath the layer of plastics material of the upper surface, for example an ABS plastics material. It may be that the anti-slip feature is confined to the layer of harder plastics material of the upper surface.

It may be that the plastics material of the upper surface contains one or more additives providing desired characteristics. For example, the plastics material may contain an anti-microbial additive. It may be that the anti-slip feature is enhanced by the presence of the anti-microbial additive.

It may be that, when tested according to DIN 50197:1992, the slip angle of the textured finish is at least 12° (classification A), more preferably at least 18° (classification B), and most preferably at least 24° (classification C).

The article may comprise a core of filler material between an upper member of plastics material and a lower member of plastics material. It may be that the upper and lower members together form an outer shell and the core is encased by the outer shell.

It may be that the method includes pre-forming the upper member and lower member from sheets of plastic material to a required shape for the article. The upper and lower members may be formed by vacuum forming, thermoforming, thermo-vacuum forming or any other suitable method.

It may be that the upper member provides the upper or top surface of the article and the method includes embossing the sheet of plastics material used to form the upper member prior to pre-forming the upper member to the required shape.

It may be that the method includes providing the filler material between the pre-formed upper and lower members and displacing the filler material throughout a cavity defined between the upper and lower members to fill the cavity prior to hardening to form the core. The upper and lower members may be held between two formers and pressure applied to the formers to displace the filler material throughout the cavity.

It may be that the lower member provides the lower or bottom surface of the article and the method includes configuring the lower member to assist distribution of the filler material throughout the cavity. For example the lower member may be provided with an array of interlinked recessed regions that allow the filler material to flow freely within the cavity.

The article is a shower tray, bath or tub.

Embodiments of the invention will now be described, by example only, with reference to the following drawings, in which:-
**Figure 1** is a perspective view of a shower tray according to the invention from above;
**Figure 2** is a cross-sectional view of the shower tray shown in Figure 1;
**Figure 3** is an enlarged cross-sectional view of part of the shower tray shown in Figure 2;
**Figures 4 to 7** show details of anti-slip surface finishes under microscope;

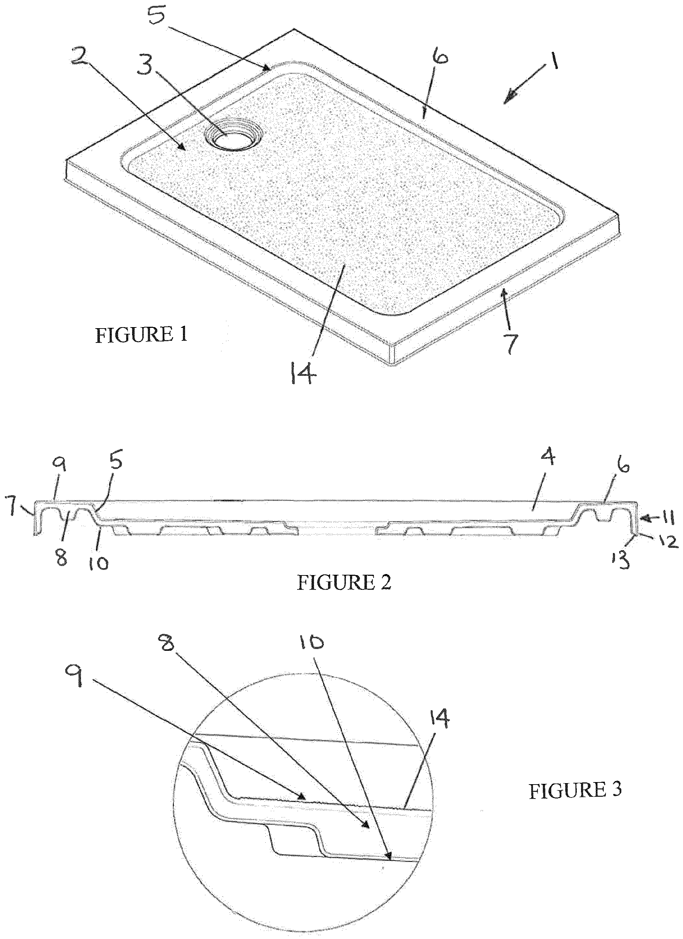

Referring first to Figures 1 to 3 of the accompanying drawings, a shower tray 1 is shown having a well 2 for collecting water dispensed from the shower (not shown). A drain hole 3 is provided in a floor 4 of the well 2 for discharging water collected in the well 2 to a waste pipe (not shown). The drain hole 3 may be provided at any position in the floor 4 and the floor 4 may be configured so that water flows towards the drain hole 3. Any other arrangement for discharging water collected in the well 2 may be employed. Inner side walls 5 of the well 2 lead to outwardly extending upper walls 6 at the top of the tray 1 that lead to outer side walls 7. The upper walls 6 are arranged to direct water towards the well 2. In this embodiment, the tray 1 is of rectangular shape in plan view but this is not essential and the tray 1 may have other shapes.

The tray 1 has an inner core 8 sandwiched between an upper member 9 and a lower member 10 which form a shell 11 that substantially encases the inner core 8. The upper member 9 is pre-formed, for example by vacuum forming, thermoforming or thermo-vacuum forming from a polymeric sheet of plastic material to the required shape of the topside of the tray 1. In this embodiment, the polymeric sheet of the upper member 9 is an acrylic capped ABS sheet but this is not essential and other polymeric sheet materials may be employed. The polymeric sheet of the upper member 9 may be 2mm thick with an acrylic layer 0.2mm thick and an ABS layer 1.8mm thick. The acrylic layer may include an anti-microbial additive. Other thicknesses of the polymeric sheet and/or of the acrylic and ABS layers may be employed. The acrylic layer forms the upper surface of the tray 1, i.e. that surface of the tray 1 that is seen in use of the tray 1. The lower member 10 is also pre-formed, for example by vacuum forming, thermoforming or thermo-vacuum forming from a polymeric sheet of plastic material to the required shape of the underside of the tray 1 for co-operating with the upper member 9 to form the shell 11. In this embodiment the polymeric sheet of the lower member 10 is an ABS sheet but this is not essential and other polymeric sheet materials may be employed. The polymeric sheet of the lower member 10 may be 1.5mm thick. Other thicknesses of the polymeric sheet may be employed. The lower member 10 may be configured for mounting legs on the underside of the tray 1. The legs may be adjustable to alter the height of the tray 1 and/or to level the tray 1 during installation. For example, the lower member 10 may have one or more formations such as sockets on the underside for mounting the legs. The lower member 10 may be configured to provide strength and rigidity to the floor 4 of the well 2. For example, the lower member 10 may have one or more formations such as ribs on the underside for increasing the thickness of the core 8 in selected areas of the floor 4. The inner core 8 may be a composite filler material that bonds to the upper and lower members 9, 10. In this embodiment, the composite filler material is a curable resin-stone mixture but this is not essential and other filler materials may be employed.

The shower tray 1 may be produced as follows:
The sheet materials of the upper and lower members 9, 10 are pre-formed into the required shape by any suitable method such as vacuum forming, thermoforming or thermo-vacuum forming. The upper member 9 is supported upside down in a former and the stone-resin mixture for the core 8 is then poured into the upper member 9. The upper and lower members 9, 10 are then brought together to form the shell 11 with the resin-stone mixture between the two members 9, 10. The resin-stone mixture may be flowable so as to be displaced between the members 9, 10 when the members 9, 10 are brought together to fill the cavity. The amount of the resin-stone mixture poured into the upper member 9 may be controlled to fill the cavity formed within the shell 11 between the members 9, 10. Peripheral edges 12, 13 of the members 9, 10 may be a close fit to contain the stone-resin mixture within the cavity while the mixture cures and hardens to form the core 8. The stone-resin mixture bonds to the upper and lower members 9, 10 and bonding may be assisted by coating the surface of the members 9, 10 with a resin adhesive. The method and apparatus for producing the tray 1 is the subject of our granted European Patent No. 1667562 to which the reader is directed for further details.

In accordance with the present invention, the exposed upper surface of the tray 1, i.e. the surface that is seen in use, is provided with an anti-slip feature in the form of a textured surface finish 14 embossed in the surface of the sheet material forming the upper member 9 of the tray 1. The anti-slip feature is applied to the surface of the sheet material on the side that will form the exposed upper surface of the tray 1 by a roller (not shown) having a pattern in the surface of the roller to create the required anti-slip feature in the sheet material. For example, when the sheet material is an acrylic capped ABS, the textured surface finish 14 is applied to the acrylic layer. In a preferred embodiment, the textured surface finish 14 is applied to the sheet material before the sheet material is formed to create the upper member 9 of the shower tray 1. Formation of the anti-slip feature in the surface of the sheet material may be assisted by heating the roller and/or the sheet material. It may be that the sheet material is formed by an extrusion process and the anti-slip feature is applied to the extruded sheet material within the sheet extrusion process. It may be that the anti-slip feature is applied to the sheet material before the plastics material has set, i.e. while the plastics material is in a softened condition.

The anti-slip feature may be applied to all or part of the upper surface of the tray by controlling where the textured surface finish is applied to the sheet material. For example, the anti-slip feature may be provided on the upper surface of the floor 4 of the well 2 only. Alternatively, the anti-slip feature may be provided on the upper surface of the floor 4 and one or more or all of the inner side walls 5, upper walls 6 and outer side walls 7. The anti-slip feature may cover the entire upper surface of the tray 1.

Anti-slip features produced by the above method were assessed by a ramp test according to DIN51097:1992 using the sheet material having the embossed anti-slip feature contaminated with a soap solution to replicate the conditions that exist when a person is showering. The inclination of sheet material is gradually increased until a test subject standing on the contaminated sheet material slips. The average angle at which slip occurs is used to define the slipperiness of the surface according to the following classification:

| **Classification** | **A** | **B** | **C** |
|---|---|---|---|
| Slip Angle (°) | 12-17 | 18-23 | > 24 |

Using the ramp test, the higher the slip angle the less slippery the surface so that surfaces having classification C are less slippery than surfaces having classification B which in turn are less slippery than surfaces having classification A.

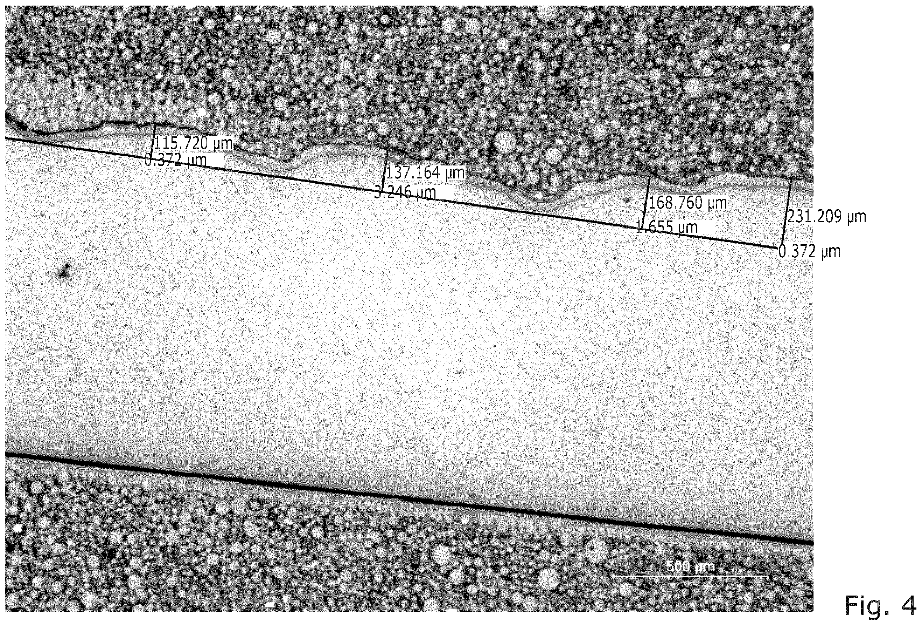

The results of the ramp test for samples of four sheet materials having the anti-slip features shown in Figures 4 to 7 are as follows:

| **Sample** | **Classification** | **Peak Height** |
|---|---|---|
| Figure 4 | B | 116*µ*m to 231*µ*m |
| Figure 5 | B | 176*µ*m to 240*µ*m |
| Figure 6 | C | 68*µ*m to 76*µ*m |
| Figure 7 | C | 69*µ*m to 73*µ*m |

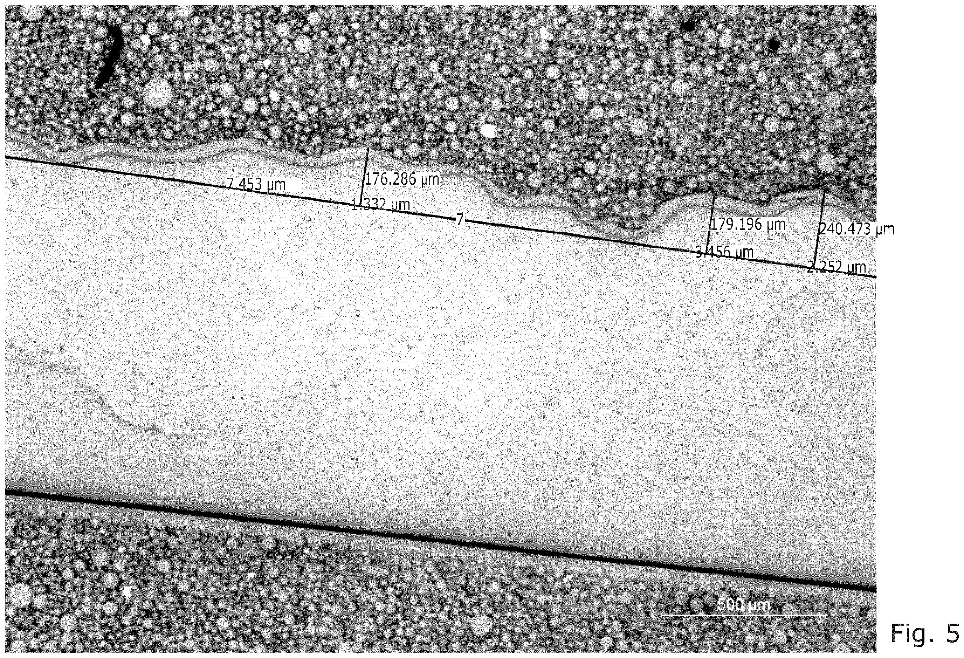

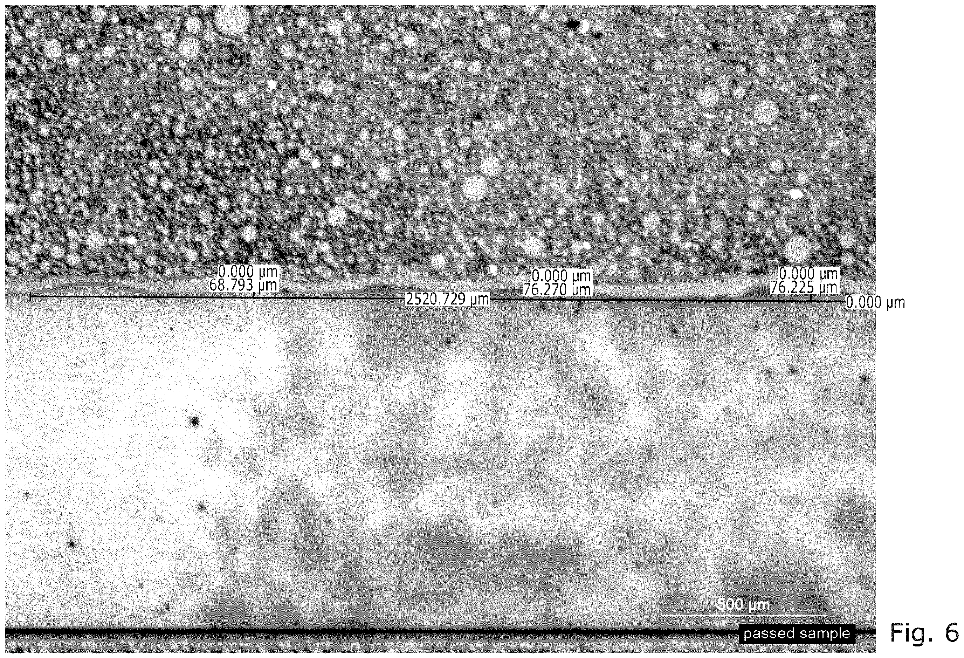

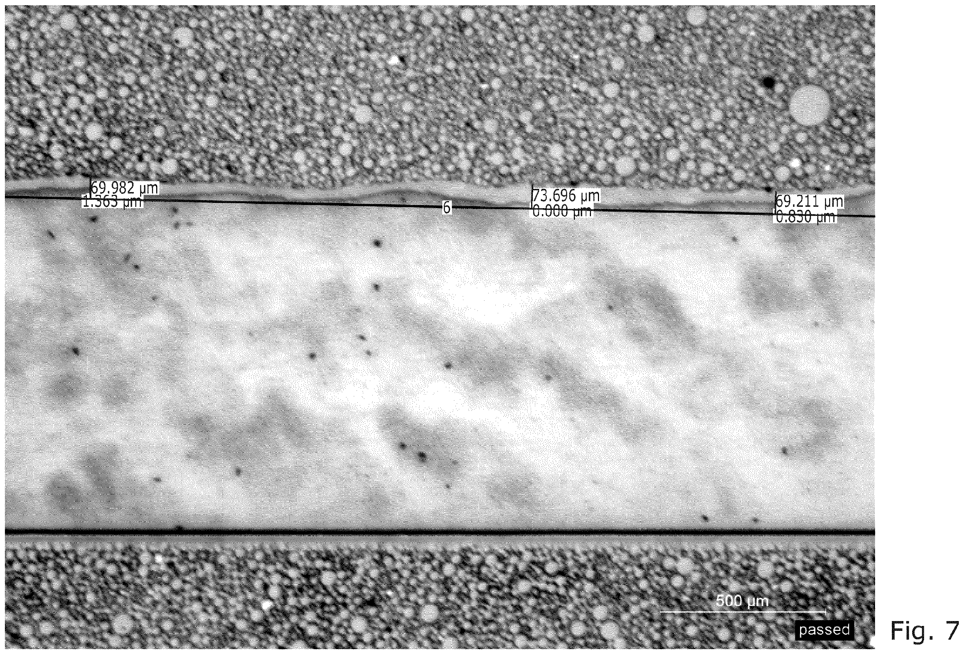

As can be seen, the samples shown in Figures 6 and 7 produced the best results achieving a C classification under the ramp test with the samples shown in Figures 4 and 5 achieving a B classification. In the samples shown in Figures 6 and 7, the embossed pattern has a plurality of raised areas having a generally uniform peak height (i.e. small variation in peak height across the surface) whereas in the samples shown in Figures 4 and 5, the embossed pattern has a plurality of raised areas having non-uniform peak height (i.e. large variation in peak height across the surface). Also, the peak height of the samples shown in Figures 6 and 7 is lower than the peak height of the samples shown in Figures 4 and 5. The results suggest that the slipperiness of the surface formed by embossing the surface of the sheet material is affected by peak height of the raised areas formed by the embossed anti-slip feature and by variation in peak height of the raised areas across the surface. Thus the results appear to indicate that slipperiness is reduced when the variation in peak height of the raised areas across the surface is small and/or when the peak height is reduced. Thus, textured finishes created when the raised areas of the embossed anti-slip feature are substantially uniform (i.e. small variation in peak height across the surface) perform better under the ramp test than textured finishes created when the raised areas of the embossed anti-slip feature are substantially non-uniform (i.e. large variation in peak height across the surface) and when the peak height is reduced.

As will be appreciated, forming the anti-slip feature in the surface of the sheet material avoids the need for an additional post application process step to apply an anti-slip finish to a formed shower tray, for example by spraying an anti-slip coating material onto the upper surface of the formed shower tray, thereby reducing the overall process time and costs of a comparative post application process.

Although the exemplary embodiment of the invention describes the provision of an anti-slip feature in a shower tray having an inner core sandwiched between upper and lower members, it will be understood that the anti-slip feature could be provided in any construction of shower tray having an upper surface of plastics material that allows the anti-slip feature to be formed in the upper surface. It will also be understood that the invention is not limited to shower trays and is capable of wider application to other sanitary ware articles such as baths and tubs. In such applications the anti-slip feature may be applied to reduce the slipperiness of all or part of the exposed upper surface of the article and in particular, but not exclusively the floor area of such articles where a person may stand in the bath or tub, for example when washing/showering and when getting in and out of the bath or tub. In preferred embodiments, the anti-slip feature is applied to the surface of a sheet plastics material prior to using the sheet plastics material with the anti-slip feature present to form a sanitary ware article such as a shower tray. In this way the anti-slip feature is provided as an integral part of a sheet plastics material from which the sanitary ware article is subsequently produced rather than being applied to the sanitary ware article after it has been formed.

It will be understood that the invention is not limited to the embodiment described above and modifications and alterations within the scope of the claims will be apparent to those skilled in the art.

## Claims

1. A method of manufacturing an article having an upper surface of plastics material provided with an anti-slip feature (14) in the upper surface, the method including the steps of:
providing a roller with a surface pattern configured to create a desired anti-slip feature (14), providing a sheet (9) of plastics material having an upper surface and a lower surface,
embossing the upper surface of the sheet of plastics material with the roller,
**characterised in that** a textured finish having a plurality of raised areas having a substantially uniform height of 80 *µ*m is created by the embossing, the embossing providing the anti-slip feature, and
using the sheet of plastics material to form the article, the article comprising a shower tray, bath or tub, wherein the upper surface of the sheet having the textured finish forms the upper surface of the shower tray, bath or tub.

2. A method according to claim 1 wherein the roller has a pattern configured to create the textured finish in the upper surface.

3. A method according to any preceding claim wherein the roller and/or the plastics material is heated.

4. A method according to any preceding claim wherein the anti-slip feature covers part or all the upper surface of the article.

5. A method according to claim 4 wherein the anti-slip feature is confined to a recessed area in the upper surface of the article, for example a well (2) of a shower tray (1).

6. A method according to any preceding claim wherein the upper surface comprises a layer of plastics material that provides a hardwearing, scratch resistant surface, and a layer of softer plastics material is provided underneath the layer of harder plastics material of the upper surface with the anti-slip feature confined to the layer of harder plastics material of the upper surface.

7. A method according to any preceding claim wherein a slip angle of the textured finish is at least 12° when tested according to DIN 50197:1992, more preferably at least 18° when tested according to DIN 50197:1992, and most preferably at least 24° when tested according to DIN 50197:1992.

8. A method according to any preceding claim wherein the article comprises a core (8) of filler material between an upper member (9) of plastics material and a lower member (10) of plastics material, wherein the upper member provides the upper surface of the article having the anti-slip feature.

9. A method according to claim 8 wherein the upper member and lower members are pre-formed from sheets of plastic material to a required shape for the article, for example the upper and lower members are formed by vacuum forming, thermoforming, thermo-vacuum forming.

10. A method according to claim 8 or claim 9 wherein the sheet of plastics material used to form the upper member is embossed to provide the anti-slip feature prior to pre-forming the upper member to the required shape.

11. A method according to claim 9 or claim 10 wherein the filler material is provided between the pre-formed upper and lower members and is displaced throughout a cavity defined between the upper and lower members to fill the cavity prior to hardening to form the core.

## Patentansprüche

1. Verfahren zum Herstellen eines Gegenstands, der eine obere Oberfläche aus Kunststoffmaterial aufweist und der mit einem rutschhemmenden Merkmal (14) in der oberen Oberfläche bereitgestellt wird, wobei das Verfahren die Schritte aufweist von:
Bereitstellen einer Walze mit einem Oberflächenmuster, die konfiguriert ist, um ein gewünschtes rutschhemmendes Merkmal (14) zu schaffen, Bereitstellen einer Folie (9) aus Kunststoffmaterial, die eine obere Oberfläche und eine untere Oberfläche aufweist,
Prägen der oberen Oberfläche der Folie aus Kunststoffmaterial mit der Walze,
**dadurch gekennzeichnet, dass** ein strukturiertes Finish, das eine Vielzahl von erhöhten Bereichen aufweist, die eine im Wesentlichen einheitliche Höhe von 80 µm aufweisen, durch das Prägen geschaffen wird, wobei das Prägen das rutschhemmende Merkmal bereitstellt, und
Verwenden der Folie aus Kunststoffmaterial, um den Gegenstand zu bilden, wobei der Gegenstand eine Duschwanne, eine Badewanne oder eine Wanne ist, wobei die obere Oberfläche der Folie, die das strukturierte Finish aufweist, die obere Oberfläche der Duschwanne, der Badewanne oder der Wanne bildet.

2. Verfahren nach Anspruch 1, wobei die Walze ein Muster aufweist, das konfiguriert ist, um das strukturierte Finish in der oberen Oberfläche zu schaffen.

3. Verfahren nach einem vorstehenden Anspruch, wobei die Walze und/oder das Kunststoffmaterial erwärmt werden.

4. Verfahren nach einem vorstehenden Anspruch, wobei das rutschhemmende Merkmal einen Teil oder die gesamte obere Oberfläche des Gegenstands bedeckt.

5. Verfahren nach Anspruch 4, wobei das rutschhemmende Merkmal auf einen vertieften Bereich in der oberen Oberfläche des Gegenstands beschränkt ist, zum Beispiel eine Vertiefung (2) einer Duschwanne (1).

6. Verfahren nach einem vorstehenden Anspruch, wobei die obere Oberfläche eine Schicht aus Kunststoffmaterial umfasst, die eine strapazierfähige, kratzfeste Oberfläche bereitstellt, und wobei eine Schicht aus weicherem Kunststoffmaterial unter der Schicht aus härterem Kunststoffmaterial der oberen Oberfläche mit dem rutschhemmende Merkmal, das auf die Schicht aus härterem Kunststoffmaterial der oberen Oberfläche beschränkt ist, bereitgestellt wird.

7. Verfahren nach einem vorstehenden Anspruch, wobei ein Schräglaufwinkel des strukturierten Finish mindestens 12° bei Prüfung nach DIN 50197:1992, bevorzugter 18° bei Prüfung nach DIN 50197:1992 und besonders bevorzugt mindestens 24° bei Prüfung nach DIN 50197:1992 beträgt.

8. Verfahren nach einem vorstehenden Anspruch, wobei der Gegenstand einen Kern (8) aus Füllmaterial zwischen einem oberen Element (9) aus Kunststoffmaterial und einem unteren Element (10) aus Kunststoffmaterial umfasst, wobei das obere Element die obere Oberfläche des Gegenstands mit dem rutschhemmenden Merkmal bereitstellt.

9. Verfahren nach Anspruch 8, wobei das obere Element und das untere Element aus Folien aus Kunststoffmaterial zu einer erforderlichen Form des Gegenstands vorgeformt werden, zum Beispiel werden das obere und das untere Element durch Vakuumformen, Warmformen, Warm-Vakuumformen gebildet.

10. Verfahren nach Anspruch 8 oder Anspruch 9, wobei die zum Bilden des oberen Elements verwendete Kunststofffolie geprägt wird, um das rutschhemmende Merkmal bereitzustellen, bevor das obere Element in die erforderliche Form vorgeformt wird.

11. Verfahren nach Anspruch 9 oder Anspruch 10, wobei das Füllmaterial zwischen dem vorgeformten oberen und unteren Element bereitgestellt wird und überall in einem Hohlraum, der zwischen dem oberen und dem unteren Element definiert ist, verschoben wird, um den Hohlraum vor einem Aushärten zu füllen, um den Kern zu bilden.

## Revendications

1. Procédé de fabrication d'un article ayant une surface supérieure de matière plastique, pourvu d'une caractéristique antidérapante (14) dans la surface supérieure, le procédé incluant les étapes de :
la fourniture d'un rouleau avec un motif de surface configuré pour créer une caractéristique antidérapante souhaitée (14), la fourniture d'une feuille (9) de matière plastique ayant une surface supérieure et une surface inférieure,
le gaufrage de la surface supérieure de la feuille de matière plastique avec le rouleau,
**caractérisé en ce qu'**une finition texturée ayant une pluralité de zones en relief ayant une hauteur sensiblement uniforme de 80 µm est créée par le gaufrage, le gaufrage fournissant la caractéristique antidérapante, et
l'utilisation de la feuille de matière plastique pour former l'article, l'article comprenant un bac de douche, une baignoire ou une cuvette, dans lequel la surface supérieure de la feuille ayant la finition texturée forme la surface supérieure du bac de douche, de la baignoire ou de la cuvette.

2. Procédé selon la revendication 1, dans lequel le rouleau a un motif configuré pour créer la finition texturée dans la surface supérieure.

3. Procédé selon l'une quelconque des revendications précédentes, dans lequel le rouleau et/ou la matière plastique sont chauffés.

4. Procédé selon l'une quelconque des revendications précédentes, dans lequel la caractéristique antidérapante couvre une partie ou l'intégralité de la surface supérieure de l'article.

5. Procédé selon la revendication 4, dans lequel la caractéristique antidérapante est confinée à une zone évidée dans la surface supérieure de l'article, par exemple un puits (2) d'un bac de douche (1).

6. Procédé selon l'une quelconque des revendications précédentes, dans lequel la surface supérieure comprend une couche de matière plastique qui fournit une surface durable et résistante aux rayures, et une couche de matière plastique plus souple est prévue au-dessous de la couche de matière plastique plus dure de la surface supérieure avec la caractéristique antidérapante confinée à la couche de matière plastique plus dure de la surface supérieure.

7. Procédé selon l'une quelconque des revendications précédentes, dans lequel un angle de dérive de la finition texturée est au moins 12° lors d'essais selon DIN 50197:1992, de préférence au moins 18° lors d'essais selon DIN 50197:1992, et avec le plus de préférence au moins 24° lors d'essais selon DIN 50197:1992.

8. Procédé selon l'une quelconque des revendications précédentes, dans lequel l'article comprend un coeur (8) de matière de remplissage entre un organe supérieur (9) de matière plastique et un organe inférieur (10) de matière plastique, dans lequel l'organe supérieur fournit la surface supérieure de l'article ayant la caractéristique antidérapante.

9. Procédé selon la revendication 8, dans lequel l'organe supérieur et l'organe inférieur sont préformés de feuilles de matière plastique dans une forme requise pour l'article, par exemple les organes supérieur et inférieur sont formés par formage sous vide, thermoformage, ou thermoformage sous vide.

10. Procédé selon la revendication 8 ou 9, dans lequel la feuille de matière plastique utilisée pour former l'organe supérieur est gaufrée pour fournir la caractéristique antidérapante avant le préformage de l'organe supérieur à la forme requise.

11. Procédé selon la revendication 9 ou 10, dans lequel la matière de remplissage est fournie entre les organes supérieur et inférieur préformés et est déplacée à travers une cavité définie entre les organes supérieur et inférieur pour remplir la cavité avant le durcissement afin de former le coeur.
